# EUROPÄISCHE PATENTSCHRIFT

(11) **EP 0 826 018 B1**
(45) Veröffentlichungstag und Bekanntmachung des Hinweises auf die Patenterteilung: **30.01.2002**
(21) Anmeldenummer: 96916028.2
(22) Anmeldetag: 09.05.1996
(51) Int. Cl.: C09D 5/00, C08J 3/05, C09D 5/03

(54) **WÄSSRIGE PULVERLACK-DISPERSION**
AQUEOUS POWDER COATING DISPERSION
DISPERSION AQUEUSE DE REVETEMENT EN POUDRE

(30) Priorität: 19.05.1995 DE 19518392
(43) Veröffentlichungstag der Anmeldung: 04.03.1998
(73) Patentinhaber: BASF Coatings AG, 48165 Münster (DE)
(72) Erfinder: MÖLLER, Dietmar, D-48317 Drensteinfurt (DE); WOLTERING, Joachim, D-48159 Münster (DE)
(74) Vertreter: Fitzner, Uwe, Dr.
(86) Internationale Anmeldenummer: EP9601959
(87) Internationale Veröffentlichungsnummer: WO9637561

(56) Entgegenhaltungen:
- EP-A- 0 043 104
- WO-A-80/00447
- WO-A-95/28448
- WO-A-96/32452
- DE-A- 2 716 118
- US-A- 3 787 230
- DATABASE WPI Section Ch, Week 7725 Derwent Publications Ltd., London, GB; Class A82, AN 77-44552Y XP002022258 & JP,A,52 058 731 (OSAME KOGYO KK) , 14.Mai 1977

## Beschreibung

Die vorliegende Erfindung betrifft ein Verfahren zur Herstellung einer wäßrigen Pulverlack-Dispersion, die sich insbesondere als Überzug für mit Wasserbasislack beschichtete Automobilkarosserien eignet.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere sind zur Erzielung eines gleichmäßigen Aussehens erhöhte Schichtdicken erforderlich. Auf der anderen Seite bedingt der Einsatz von pulverförmigen Lacken eine andere Applikationstechnologie. Die für Flüssiglacke ausgelegten Anlagen können daher hierfür nicht verwendet werden. Daher ist man bestrebt. Pulverlacke in Form wäßriger Dispersionen zu entwickeln, die sich mit Flüssiglacktechnologien verarbeiten lassen.

Aus der US-Patentschrift 4268542 ist beispielsweise ein Verfahren bekannt, bei dem eine Pulverlack-Slurry verwendet wird, die sich für die Beschichtung von Automobilen eignet. Hierbei wird zunächst eine herkömmliche Pulverschicht auf die Karosserie aufgetragen und als zweite Schicht die Klarlack-Slurry. Bei dieser Klarlack-Slurry auf Basis von Acrylatharzen werden ionische Verdicker verwendet. Ferner weisen diese in einem der Beispiele einen Gehalt von 0,5 bis 30 % an glycidylhaltigen Monomeren auf. Zudem muß mit hohen Einbrenntemperaturen (über 160° C) gearbeitet werden.

Die vorliegende Erfindung hat sich nunmehr die Aufgabe gestellt, ein Verfahren zur Herstellung einer wäßrigen Pulverlack-Dispersion zur Verfügung zu stellen, die sich mit der bisherigen Flüssiglacktechnologie auf Automobilkarosserien auftragen läßt und insbesondere bereits bei Temperaturen von 130°C einbrennbar ist.

Diese Aufgabe wird gelöst durch ein Verfahren zur Herstellung einer wäßrigen Pulverlackdispersion,
I. bei dem aus einer festen, pulverförmigen Komponente A und einer wäßrigen Komponente B eine wäßrige Dispersion eines Pulverlacks mit
   - einer Glastemperatur von 20 bis 90°C, vorzugsweise 40 bis 70 °C
   - einer Viskosität von 10 bis 1000 mPas, vorzugsweise 50 bis 300 mPas bei einer Schergeschwindigkeit von 500 s⁻¹ und einem Festkörpergehalt von 10 bis 50 %, vorzugsweise 20 bis 40 % hergestellt wird, und
II.die aus den Komponenten A und B hergestellte Dispersion
   - unter Einhaltung einer Temperatur von 0 bis 60°C, vorzugsweise 5 bis 35 °C vermahlen ,
   - auf einen pH-Wert von 4,0 bis 7,0, vorzugsweise 5,5, bis 6,5 eingestellt und
   - filtiriert wird.

Der spezifische Energieantrag während des Mahlprozesses beträgt vorzugsweise 20 bis 500 Wh/kg, insbesondere 50 bis 250 Wh/kg.

Bevorzugt kommt eine wäßrige Pulverlackdispersion zum Einsatz, die aus einer festen, pulverförmigen Komponente A und einer wäßrigen Komponente B besteht, wobei
Komponente A. ein Pulverlack ist enthaltend
   a) wenigstens ein epoxidhaltiges Bindemittel mit einem Gehalt von 30 bis 45 %, vorzugsweise 30 bis 35 % an glycidylhaltigen Monomeren ggf. mit einem Gehalt an vinylaromatischen Verbindungen, vorzugsweise Styrol,
   b) wenigstens ein Vernetzungsmittel, vorzugsweise geradkettige, aliphatische Dicarbonsäuren und/oder carboxyfunktionelle Polyester und
   c) ggf. Katalysatoren, Hilfsstoffe, pulverlacktypische Additive, wie Entgasungsmittel, Verlaufsmittel, UV-Absorber, Radikalfänger, Antioxidantien
   und
Komponente B. eine wäßrige Dispersion ist enthaltend
   a) wenigstens einen nicht-ionischen Verdicker und
   b) ggf. Katalysatoren, Hilfsstoffe, Entschäumungsmittel, Dispersionshilfsmittel, Netzmittel, vorzugsweise carboxyfunktionelle Dispergiermittel, Antioxydantien, UV-Absorber, Radikalfänger, geringe Mengen Lösemittel, Verlaufsmittel, Biozide und/oder Wasserrückhaltemittel.

Derart zusammengesetzte Dispersionen finden insbesondere für Pulverklarlacke Verwendung.

Als epoxifunktionelles Bindemittel für den festen Pulverlack, der zur Herstellung der Dispersion verwendet wird, sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B.bekannt aus EP-A-299 420, DE-B-22 14 650, DE-B-27 49 576, US-A-4,091,048 und US-A-3,781,379).

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten sind, Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 3.000 bis 10.000, und eine Glasübergangstemperatur (T_{G}) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Als Vernetzer sind Carbonsäuren, insbesondere gesättigte, geradkettige, aliphatische Dicarbonsäuren mit 3 bis 20 C-Atomen im Molekül geeignet. Ganz besonders bevorzugt wird Decan-1,12-dicarbonsäure eingesetzt. Zur Modifizierung der Eigenschaften der fertigen Pulverklarlacke können ggf. noch andere Carboxylgruppen enthaltende Vemetzer eingesetzt werden. Als Beispiele hierfür seien gesättigte verzweigte oder ungesättigte geradkettige Di- und Polycarbonsäuren sowie Polymere mit Carboxylgruppen genannt.

Femer sind auch Pulverlacke geeignet, die einen epoxifunktionellen Vernetzer und ein säurefunktionelles Bindemittel enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der epoxidgruppenhaltige Vemetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Erfindungsgemäß enthält das Bindemittel vinylaromatische Verbindungen, insbesondere Styrol . Um die Gefahr der Rißbildung zu begrenzen, liegt der Gehalt jedoch nicht über 35 Gew.-%. Bevorzugt werden 10 bis 25 Gew.-%.

Die festen Pulverlacke enthalten ggf.einen oder mehrere geeignete Katalysatoren für die Epoxidharz-Aushärtung. Geeignete Katalysatoren sind Phosphoniumsalze organischer oder anorganischer Säuren, quartemäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vemetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Geeignet sind Verlaufsmittel auf der Basis von Polyacrylaten, Polysiloxanen bzw. Fluorverbindungen.

Einsetzbare Antioxidantien sind Reduktionsmittel wie Hydrazide und Phosphorverbindungen sowie Radikalfänger z.B. 2,6 Di-tert-Buthylphenolderivate.

Verwendbare UV-Absorber sind bevorzugt Triazine und Benztriphenol.

Als Radikalfänger sind bevorzugt 2,2,6,6 Tetramethylpiperidinderviate einsetzbar.

Als weiteren Bestandteil enthält die wässrige Komponente B der Pulverlackdispersion wenigstens einen nicht-ionischen Verdicker a). Bevorzugt werden nicht-ionische Assoziativ-Verdicker a) eingesetzt. Strukturmerkmale solcher Assoziativ-Verdicker a) sind:
aa) ein hydrophiles Gerüst, das eine ausreichende Wasserlöslichkeit sicherstellt und
ab) hydrophobe Gruppen, die zu einer assoziativen Wechselwirkung im wäßrigen Medium fähig sind.

Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt.
Als hydrophile Gerüste werden vorzugsweise Polyacrylate, Celluloseether oder besonders bevorzugt Polyurethane eingesetzt, die die hydrophoben Gruppen als Polymerbausteine enthalten.
Ganz besonders bevorzugt sind als hydrophile Gerüste Polyurethane, die Polyetherketten als Bausteine enthalten, vorzugsweise aus Polyethylenoxid.
Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder

Amine mit den schon genannten langkettigen Alkylresten oder Aralkylresten sein können.

Weiterhin kann die Komponente B Katalysatoren, Verlaufsmittel, Antioxidantien, UV-Absorber, Radikalfänger und Netzmittel enthalten. Im wesentlichen kommen hier die bereits für die Komponente A aufgezählten Stoffe in Betracht.

Ferner können der Komponente B Hilfsstoffe, Entschäumungsmittel, Dispersionshilfsmittel, Biozide, Lösungs- und Neutralisationsmittel zugesetzt sein.

Als Entschäumungsmittel kommen bevorzugt modifzierte Polysiloxane in Betracht.

Dispersionshilfsmittel sind z.B. bevorzugt Ammonium bzw. Metallsalze von Polycarboxylaten.

Verwendbare Neutralisationsmittel sind Amine, Ammoniak und Metallhydroxide.

Die Herstellung der festen Pulverlacke erfolgt nach bekannten Methoden (vgl. z,.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet.

Aus dem Pulver wird anschließend durch Naßvermahlung die wäßrige Pulverklarlackdispersion hergestellt.

In einer bevorzugten Ausführungsform der Erfindung wird das Verfahren zur Herstellung einer wäßrigen Pulverlackdispersion auf der Basis der beschriebenen Komponente A, die erfindungsgemäß in einer Komponente B dispergiert wird. Letztere besteht aus einer wäßrigen Dispersion wenigstens eines nicht-ionischen Verdickers und ggfs von Katalysatoren, Hilfsstoffen, Antischaummitteln, Antioxidantien, Netzmitteln, UV-Absorbem, Radikalfängem, Bioziden, Wasserrückhaltemitteln geringe Mengen Lösemitteln und/oder Dispergierhilfsmitteln, vorzugsweise carboxyfunktionelle Dispergierhilfsmitteln.

Erfindungsgemäß wird nach der Dispergierung der Komponente A in der Komponente B vermahlen.

Die erhaltene mittlere Komgröße liegt zwischen 1 und 25 µm, vorzugsweise unter 20 µm. Besonders bevorzugt bei 3 bis 10µm.

Erfindungswesentlich ist, daß während des Mahlprozesses die Dispersion nur geringe Mengen Lösemittel enthält. Es ist daher u.U. erforderlich, die Mahlvorrichtung vor Beginn des Mahlprozesses von Lösemittelresten zu befreien.

Der Dispersion können vor oder nach der Naßvermahlung 0 bis 5 Gew.% eines Entschäumergemisches, eines Ammonium und/oder Alkalisalzes, eines carboxylfunktionellen oder nichtionischen Dispergierhilfsmittels, Netzmittels und/oder Verdickergemisches sowie der anderen Additive zugesetzt werden.

Vorzugsweise werden erfindungsgemäß Entschäumer, Dispergierhilfs-, Netz- und/oder Verdickungsmittel zunächst in Wasser dispergiert. Dann werden kleine Portionen des Pulverklarlackes eingerührt. Anschließend werden noch einmal Entschäumer, Dispergierhilfs-, Verdickungs- und Netzmittel eindispergiert. Abschließend werden nochmals in kleinen Portionen Pulverklarlacke eingerührt.

Die Einstellung des pH-Wertes erfolgt erfindungsgemäß vorzugsweise mit Ammoniak oder Aminen. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Die Pulverlackdispersion läßt sich insbesondere in Form eines Klarlacks als Überzug von Basislacken, vorzugsweise in der Automobilindustrie, verwenden. Besonders geeignet ist eine solche Klarlackdispersion für Wasserbasislacke auf Basis eines Polyesters, Polyurethanharzes und eines Aminoplastharzes.

Die Pulverlackdispersionen lassen sich mit den aus der Flüssiglacktechnologie bekannten Methoden aufbringen. insbesondere können sie mittels Spritzverfahren aufgebracht werden. Ebenso kommen elektrostatisch unterstützte Hochrotation oder pneumatische Applikation in Betracht.

Die auf die Basislackschicht aufgebrachten Pulverklarlackdispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130°C durchgeführt werden. Durchführbar ist das Einbrennen bei 130 bis 180°C, vorzugsweise 135 bis 155°C.

Mit dem erfindungsgemäßen Verfahren können Schichtdicken von 30 bis 50, vorzugsweise 35 bis 45 µm erreicht werden. Klarlacke mit vergleichbarer Qualität konnten bisher nach dem Stand der Technik unter Einsatz von Pulverklarlacken nur durch Auftrag von Schichtdicken von 65 bis 80 µm erreicht werden.

### Beispiel für die Produktion eines Pulver-Surry

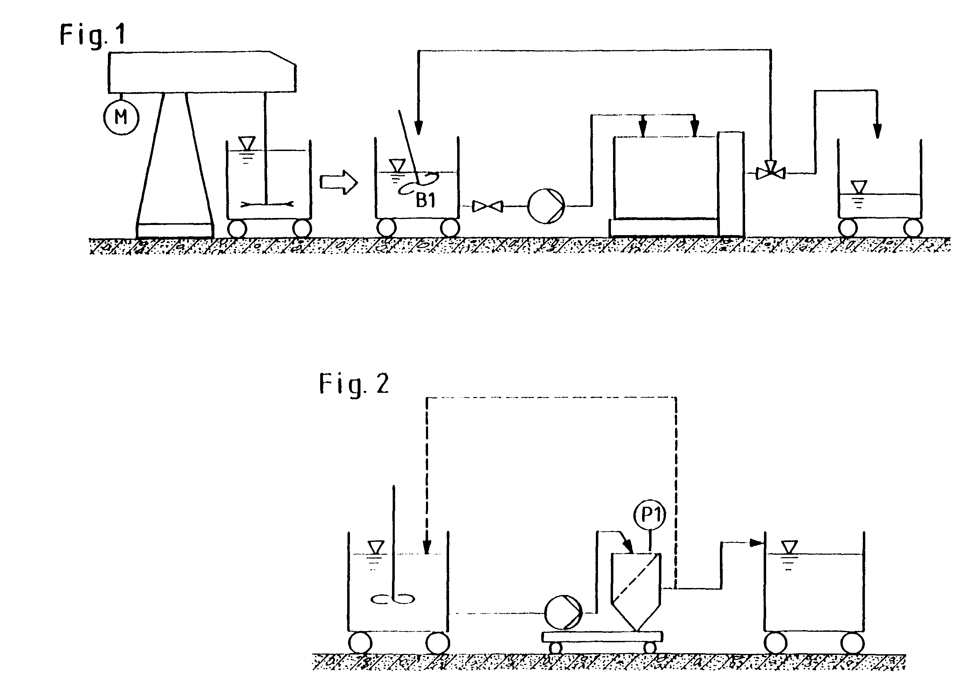

Das zur Produktion des Pulver-Slurry verwendete Equipment und die durchgeführte Verfahrensweise sind in den Abbildungen 1 und 2 schematisch dargestellt.

Der Produktionsprozeß läuft wie folgt ab:

### 1. Einwaage der flüssigen Komponenten

VE-Wasser, Verdicker, Netzmittel, Dispergiermittel werden im Behälter B1 an einem Dissolver vorgelegt. Nach Zugabe des Pulvers zu den Flüssigkeiten wird der Ansatz 20 min dissolvert (Scheibenumfangsgeschwindigkeit 20 m/s)

### 2. Vorspülen der Rührwerkskugelmühle

Vor Beginn der Naßvermahlung wird die Mühle mit einem Gemisch aus VE-Wasser und der im Produkt enthaltenen Additive solange gespült, bis die Maschine frei von anderen Lösemitteln ist.

### 3. Naßvermahlung

Der unter 1. beschriebene Produktansatz wird mit Hilfe einer Rührwerkskugelmühle vermahlen. Dazu wird das Produkt mit einer Pumpe der Mühle zugeführt und solange im Kreis über die Mühle gefahren, bis die gewünschte Endqualität (x₅₀ < 4 µ, xₘₐₓ < 10 µ) bei einer eingetragenen spezifischen Energie von ca. 60 Wh/kg erreicht wird. Die maximal erreichte Temperatur ist kleiner als 25 °C.

### 4. Komplettierung der Pulver-Slurry

Nach der Naßvermahlung wird die Pulver-Slurry komplettiert. Dazu werden noch weitere geringe Mengen an Additiven (Verdicker, Netzmittel, Amin) unter Rühren zugegeben.

### 5. Filtration

Die Filtration erfolgt, wie es in Abb. 2 dargestellt ist. Die Pulver-Slurry wird mit Beutelfiltern (PONG 50) anfangs im Kreis filtriert. Anschließend erfolgt die Filtration in einer Passage über denselben Beutelfilter in einen sauberen Behälter. Danach erfolgt die Abfüllung der Slurry.

## Patentansprüche

1. Verfahren zur Herstellung einer wäßrigen Pulverlackdispersion,
I. bei dem aus einer festen, pulverförmigen Komponente A und einer wäßrigen Komponente B eine wäßrige Dispersion eines Pulverlacks mit
- einer Glastemperatur von 20 bis 90°C, vorzugsweise 40 bis 70 °C
- einer Viskosität von 10 bis 1000 mPas, vorzugsweise 50 bis 300 mPas bei einer Schergeschwindigkeit von 500 s⁻¹ und
- einem Festkörpergehalt von 10 bis 50 %, vorzugsweise 20 bis 40 % hergestellt wird, und
II.die aus den Komponenten A und B hergestellte Dispersion
- unter Einhaltung einer Temperatur von 0 bis 60°C, vorzugsweise 5 bis 35 °C vermahlen ,
- auf einen pH-Wert von 4,0 bis 7,0, vorzugsweise 5,5, bis 6,5 eingestellt und
- filtiriert wird.

2. Verfahren nach Anspruch 1,
- **dadurch gekennzeichnet, daß** die Komponente A ein Pulverlack ist enthaltend
a) wenigstens ein epoxidhaltiges Bindemittel mit einem Gehalt von 30 bis 45 Gew.%, vorzugsweise 30 bis 35 Gew.% an glycidylhaltigen Monomeren mit einem Gehalt an vinylaromatischen Verbindungen, vorzugsweise Styrol,
b) wenigstens ein Vernetzungsmittel, vorzugsweise geradkettige, aliphatische Dicarbonsäuren und/oder carboxyfunktionelle Polyester und
c) ggf. Katalysatoren, Hilfsstoffe, pulverlacktypische Additive, wie Entgasungsmittel,Verlaufsmittel,UV-Absorber, Radikalfänger, Antioxidantien und
die Komponente B. eine wäßrige Dispersion ist enthaltend
a) wenigstens einen nicht-ionischen Verdicker und
b) ggf. Katalysatoren, Hilfsstoffe, Entschäumungsmittel, Dispersionshilfsmittel, Netzmittel, vorzugsweise carboxyfunktionelle Dispergiermittel, Antioxidantien, UV-Absorber, Verlaufhilfsmittel, Neutralisationsmittel, vorzugsweise Amine, Radikalfänger, geringe Mengen Lösemittel, Biozide und/oder Wasserrückhaltemittel.

3. Verfahren nach einem der Ansprüche 1 oder 2,
**dadurch gekennzeichnet, daß** , die Mahlvorrichtung vor Beginn des Mahlprozesses von Lösemittelresten befreit wird.

4. Verfahren nach einem der Ansprüche 1 bis 3,
**dadurch gekennzeichnet daß** der spezifische Energieeintrag während des Mahlprozesses zwischen 20 und 500 Wh/kg vorzugsweise 50 bis 250 Wh/kg beträgt.

5. Verfahren nach einem der Ansprüche 1 bis 4,
**dadurch gekennzeichnet, daß** die wäßrige Pulverlackdispersion nach Naßvermahlung und Komplettierung einer Nachdispergierung unterzogen wird.

6. Verfahren nach einem der Ansprüche 2 bis 5,
**dadurch gekennzeichnet daß** der Gehalt an vinylaromatischen Verbindungen im epoxidhaltigen Bindemittel höchstens 35, vorzugsweise 10 - 25 Gew.% beträgt bezogen auf Komponente Aa) beträgt.

7. Verfahren nach einem der Ansprüche 2 bis 6,
**dadurch gekennzeichnet, daß** die epoxidfunktionellen Bindemittel epoxidgruppenhaltige Polyacrylatharze sind, wobei die eingesetzten epoxidfunktionellen Monomere,vorzugsweise Glycidylacrylat, Glycidylmethacrylat und Allylglycidylester sind.

8. Verfahren nach einem der Ansprüche 1 bis 7,
**dadurch gekennzeichnet, daß** die Komponente B als nicht-ionischen Verdicker a) mindestens einen nicht-ionischen Assoziativ-Verdicker enthält der als Strukturmerkmale:
aa) ein hydrophiles Gerüst und
ab) hydrophobe Gruppen, die zu einer assoziativen Wechselwirkung im wässrigen Medium fähig sind,
enthält.

9. Verfahren nach Anspruch 8,
**dadurch gekennzeichnet, daß** der nicht-ionische Assoziativ-Verdicker a) als hydrophiles Gerüst aa) Polyurethanketten enthält.

10. Verfahren nach Anspruch 9,
**dadurch gekennzeichnet, daß** der nicht-ionische Assoziativ-Verdicker a) als hydrophiles Gerüst aa) Polyurethanketten mit Polyetherbausteinen enthält

11. Verfahren nach einem der Ansprüch 1 - 10,
**dadurch gekennzeichnet, daß** die wäßrigen Pulverlackdispersion eine Korngröße höchstens 20 µm, vorzugsweise 1 bis 10 µm aufweist.

12. Verfahren nach einem der Ansprüch 1 - 10,
**dadurch gekennzeichnet, daß** der Lösemittelgehalt der wäßrigen Pulverlackdispersion 0 - 10 % beträgt.

## Claims

1. Process for the preparation of an aqueous powder coating dispersion,
II. in the course of which an aqueous dispersion of a powder coating having
- a glass transition temperature of from 20 to 90°C, preferably from 40 to 70°C,
- a viscosity of from 10 to 1000 mPas, preferably from 50 to 300 mPas, at a shear rate of 500 s⁻¹ and a solids content of from 10 to 50%, preferably from 20 to 40%, is prepared from a solid, pulverulent component A and an aqueous component B, and
the dispersion prepared from components A and B
- is ground while maintaining a temperature of from 0 to 60°C, preferably from 5 to 35°C,
- a pH of from 4.0 to 7.0, preferably from 5.5 to 6.5, is established
- and the dispersion is filtered.

2. Process according to Claim 1, **characterized in that**
component A is a powder coating comprising
a) at least one epoxide-containing binder with a content of from 30 to 45% by weight, preferably from 30 to 35% by weight, of glycidyl-containing monomers with a content of aromatic vinyl compounds, preferably styrene,
b) at least one crosslinking agent, preferably straight-chain aliphatic dicarboxylic acids and/or carboxy-functional polyesters, and
c) if desired, catalysts, auxiliaries, typical powder clearcoat additives, such as degassing agents, levelling agents, UV absorbers, free-radical scavengers and antioxidants, and
component B is an aqueous dispersion comprising
a) at least one nonionic thickener and
b) if desired, catalysts, auxiliaries, defoaming agents, dispersion auxiliaries, wetting agents, preferably carboxy-functional dispersants, antioxidants, UV absorbers, levelling agents, neutralizing agents, preferably amines, free-radical scavengers, small quantities of solvent, biocides, and/or hygroscopic agents.

3. Process according to either of Claims 1 and 2, **characterized in that** the grinding apparatus is freed from solvent residues before beginning the grinding process.

4. Process according to one of Claims 1 to 3, **characterized in that** the specific energy input during the grinding process is between 20 and 500 Wh/kg, preferably from 50 to 250 Wh/kg.

5. Process according to one of Claims 1 to 4, **characterized in that** the aqueous powder coating dispersion is subjected to after-dispersion following wet grinding and making up.

6. Process according to one of Claims 2 to 5, **characterized in that** the content of aromatic vinyl compounds in the epoxide-containing binder is not more than 35% by weight, preferably 10-25% by weight, based on component Aa).

7. Process according to one of Claims 2 to 6, **characterized in that** the epoxide-functional binders are polyacrylate resins which contain epoxide groups, the epoxide-functional monomers employed preferably being glycidyl acrylate, glycidyl methacrylate and allyl glycidyl esters.

8. Process according to one of Claims 1 to 7, **characterized in that** component B comprises as nonionic thickener a) at least one nonionic associative thickener whose structural features include:
aa) a hydrophilic structure and
ab) hydrophobic groups which are capable of associative interaction in the aqueous medium.

9. Process according to Claim 8, **characterized in that** the nonionic associative thickener a) comprises polyurethane chains as hydrophilic structure aa).

10. Process according to Claim 9, **characterized in that** the nonionic associative thickener a) comprises polyurethane chains with polyether units as hydrophilic structure aa).

11. Process according to one of Claims 1 to 10, **characterized in that** the aqueous powder coating dispersion has a particle size of not more than 20 µm, preferably from 1 to 10 µm.

12. Process according to one of Claims 1 to 10, **characterized in that** the solvent content of the aqueous powder coating dipersion is 0-10%.

## Revendications

1. Procédé pour la préparation d'une dispersion aqueuse de peinture en poudre
I. dans laquelle, à partir d'un composant A solide pulvérulent et d'un composant aqueux B, on prépare une dispersion aqueuse d'une peinture en poudre ayant
- une température de transition vitreuse de 20 à 90°C, de préférence de 40 à 70°C,
- une viscosité de 10 à 1 000 mPa.s, de préférence de 50 à 300 mPa.s, à une vitesse de cisaillement de 500 s⁻¹, et
- une teneur en matière solide de 10 à 50 %, de préférence de 20 à 40 %, et
II. la dispersion préparée à partir des composants A et B
- est broyée avec maintien d'une température de 0 à 60°C, de préférence de 5 à 35°C,
- ajustée à un pH de 4,0 à 7,0, de préférence de 5,5 à 6,5, et
- filtrée.

2. Procédé selon la revendication 1, **caractérisé en ce que** le composant A est un vernis en poudre contenant
a) au moins un liant contenant des groupes époxy, ayant une teneur de 30 à 45 %, de préférence de 30 à 35 %, en monomères contenant des groupes glycidyliques, avec une teneur en composés vinylaromatiques, de préférence le styrène,
b) au moins un agent de réticulation, de préférence des acides dicarboxyliques aliphatiques à chaîne droite et/ou des polyesters à fonction carboxy, et
c) éventuellement des catalyseurs, adjuvants, additifs caractéristiques de peintures en poudre, tels qu'agents de dégazage, agents d'étalement, absorbeurs d'UV, capteurs de radicaux, antioxydants,
et
le composant B est une dispersion aqueuse contenant
a) au moins un épaississant non ionique et
b) éventuellement des catalyseurs, adjuvants, antimousses, adjuvants de dispersion, agents mouillants, de préférence des dispersants à fonction carboxy, antioxydants, absorbeurs d'UV, agents d'étalement, agents de neutralisation, de préférence des amines, capteurs de radicaux, de faibles quantités de solvants, biocides et/ou agents de rétention d'eau.

3. Procédé selon la revendication 1 ou 2, **caractérisé en ce que** le dispositif de broyage, avant le début du processus de broyage, est libéré de restes de solvant.

4. Procédé selon l'une quelconque des revendications 1 à 3, **caractérisé en ce que** l'apport d'énergie spécifique pendant le processus de broyage est compris entre 20 et 500 Wh/kg, de préférence va de 50 à 250 Wh/kg.

5. Procédé selon l'une quelconque des revendications 1 à 4, **caractérisé en ce que** la dispersion aqueuse de peinture en poudre, après broyage par voie humide et complément, est soumise à une post-dispersion.

6. Procédé selon l'une quelconque des revendications 2 à 5, **caractérisé en ce que** la teneur en composés vinylaromatiques du liant contenant des groupes époxy est au maximum de 35, de préférence va de 10 à 25 % en poids, par rapport au composant Aa).

7. Procédé selon l'une quelconque des revendications 2 à 6, **caractérisé en ce que** les liants à fonction époxy sont des résines polyacrylate contenant des groupes époxy, les monomères à fonction époxy utilisés étant de préférence l'acrylate de glycidyle, le méthacrylate de glycidyle et un ester allylglycidylique.

8. Procédé selon l'une quelconque des revendications 1 à 7, **caractérisé en ce que** le composant B, en tant qu'épaississant non ionique a), contient au moins un épaississant associatif non ionique qui présente comme caractéristiques structurales :
aa) un squelette hydrophile et
ab) des groupes hydrophobes qui sont aptes à une interaction associative dans le milieu aqueux.

9. Procédé selon la revendication 8, **caractérisé en ce que** l'épaississant associatif non ionique a) contient comme squelette hydrophile aa) des chaînes polyuréthanne.

10. Procédé selon la revendication 9, **caractérisé en ce que** l'épaississant associatif non ionique a) contient comme squelette hydrophile aa) des chaînes polyuréthanne à composants polyéther.

11. Procédé selon l'une quelconque des revendications 1 à 10, **caractérisé en ce que** la dispersion aqueuse de peinture en poudre présente une taille de particules d'au maximum 20 µm, de préférence de 1 à 10 µm.

12. Procédé selon l'une quelconque des revendications 1 à 10, **caractérisé en ce que** la teneur en solvant de la dispersion aqueuse de peinture en poudre va de 0 à 10 %.
